# EUROPEAN PATENT SPECIFICATION

(11) **EP 3 800 093 B1**
(45) Date of publication and mention of the grant of the patent: **07.08.2024**
(21) Application number: 19201289.6
(22) Date of filing: 03.10.2019
(51) Int. Cl.: B60R 25/01, B60R 25/24, E05B 47/00, E05B 65/52, E05B 81/00, B60R 9/00, B60R 25/23

(54) **A CENTRAL LOCKING SYSTEM FOR LOCKING A VEHICLE, A VEHICLE SYSTEM, A METHOD FOR CONTROLLING A CENTRAL LOCKING SYSTEM AND A COMPUTER PROGRAM**
ZENTRALVERRIEGELUNGSSYSTEM ZUM VERRIEGELN EINES FAHRZEUGS, FAHRZEUGSYSTEM, VERFAHREN ZUR STEUERUNG EINES ZENTRALVERRIEGELUNGSSYSTEMS UND COMPUTERPROGRAMM
SYSTÈME DE VERROUILLAGE CENTRAL D'UN VÉHICULE, SYSTÈME DE VÉHICULE, PROCÉDÉ DE COMMANDE D'UN SYSTÈME DE VERROUILLAGE CENTRAL ET PROGRAMME INFORMATIQUE

(43) Date of publication of application: 07.04.2021
(73) Proprietor: Ningbo Geely Automobile Research & Development Co. Ltd., Hangzhou Bay New District Ningbo 315336 (CN)
(72) Inventor: NILSSON, Magnus, 448 37 Floda (SE); LINDBERG NILSSON, Erik, 417 47 Göteborg (SE)
(74) Representative: Zacco Sweden AB

(56) References cited:
- EP-A2- 0 985 596
- CN-A- 106 639 732
- DE-A1- 102016 012 708
- US-A1- 2016 217 637
- US-A1- 2016 350 990

## Description

### FIELD OF THE INVENTION

The present invention relates to a central locking system for locking a vehicle, a vehicle system, a method for controlling a central locking system and a computer program. More specifically, the disclosure relates to a central locking system for locking a vehicle, a vehicle system, a method for controlling a central locking system and a computer program as defined in the introductory parts of claim 1, claim 10, claim 11 and claim 14.

### BACKGROUND

Today, in addition to a vehicle, it is also common and possible to have several different add-ons. Such add-ons may e.g. be roof boxes, trailers, bike holders, caravans and the like. It is also typically common that these add-ons are equipped with a lock in order to keep their content safe from e.g. theft, or stopping the content from falling out when the vehicle is in transit.

For each add-on a user is typically required to carry a corresponding key in addition to the key for the lock of the vehicle. Furthermore, the user is typically required to manually check each lock for each respective add-on in order to determine whether the add-on is locked and/or attached or not.

Patent application EP 0985596 A2 discloses a motor-driven vehicle having a battery lock and a parking lock. Patent application CN 106639732 A discloses a a roof box with automatic double doors and a control system of the roof box, where the roof box further comprises a left locking system and a right locking system. Patent application DE 102016012708 A1 discloses a method for controlling at least one vehicle function of a vehicle assembly having a vehicle and a roof rack which is mounted on a roof of the vehicle, where a communication link is produced between the roof rack and the vehicle, and at least one piece of information comprising the mounting state of the roof rack is transmitted to the vehicle via the communication link.

US patent application US 2018/0249130 A1 describes a method for ensuring the safety of goods transported on a highway using a smart phone hub, a portable sensor for monitoring the transported goods and a physical locking mechanism for locking the trailer comprising the goods. The smart phone hub, portable sensor and locking mechanism are managed by a remote central monitoring hub. The locking mechanism may be a Bluetooth lock, and the status of the lock may hence be monitored.

However, a problem with the above disclosure is that a user is required to be very close to the lock of the trailer in order to lock/unlock and monitor it.

There is thus a need for an improved locking mechanism for vehicles and their add-ons.

### SUMMARY

It is an object of the present invention to mitigate, alleviate or eliminate one or more of the above-identified deficiencies and disadvantages in the prior art and solve at least the above mentioned problem. According to a first aspect there is provided a central locking system for locking a vehicle, comprising a central locking unit and at least one vehicle lock of the vehicle. The vehicle lock is connected to the central locking unit and arranged to be regulated by the central locking unit between a locked and unlocked position. A mobile device is configured to wirelessly connect to the central locking unit and to control the central locking unit to regulate the vehicle lock between the locked and unlocked position. The central locking system comprises at least one remote lock for locking a remote unit configured to be detachably connected to the vehicle, wherein the remote lock is configured to be connected to the central locking unit and arranged to be regulated by the central locking unit between a locked and unlocked position. The mobile device is configured to control the central locking unit to regulate the remote lock between the locked and unlocked position. The remote lock is configured to lock and unlock any of a trailer, cargos, a roof box, a cycle carrier, a padlock, a bike lock, and a caravan.

At least one advantage with the above aspect is that a central locking system is provided that enables locking of both the vehicle and the remote unit. The vehicle and the remote unit may e.g. be locked simultaneously. Hence, security is enhanced for a user since at minimum only one locking step is needed, i.e. locking the vehicle. Several different types of remote units/add-ons (in this disclosure the term add-on may be interchanged with the term remote unit) may be configured with the remote lock and hence be connected to the central locking system.

According to some embodiments, the remote lock comprises a first wireless communication unit configured to connect the remote lock to the central locking unit via a second wireless communication unit of the central locking unit.

At least one advantage with the above embodiment is that the remote lock and the central locking unit can communicate wirelessly which enables easy addition and removal of remote units and their locks to the central locking system.

According to some embodiments, the first and second wireless communication units are a near field communications or Bluetooth unit.

At least one advantage with the above embodiment is that the remote lock and the central locking unit can communicate wirelessly which enables easy addition and removal of remote units and their locks to the central locking system.

According to some embodiments, the central locking unit comprises a mobile connection unit configured to connect to a mobile connection unit of the mobile device.

At least one advantage with the above embodiment is that the central locking unit is enabled to communicate with a mobile device such that the mobile device may be used for controlling or displaying the status of the central locking unit.

According to some embodiments, the remote lock comprises an electrically operable locking latch configured to be moved to position the remote lock in the locked and unlocked position.

At least one advantage with the above embodiment is that the remote lock is enabled to be operated remotely for locking and/or unlocking operations.

According to some embodiments, the mobile device comprises an application, wherein the application is configured to control the central locking unit to regulate the vehicle lock and the remote lock between their locked and unlocked position.

At least one advantage with the above embodiments is that the control of the vehicle lock and remote lock is centralized and easily accessed by a user operating the application making it easy for the user to lock and unlock both vehicle and remote unit.

According to some embodiments, the mobile device comprises a user interface and the mobile device is configured to display the status of the vehicle lock and the remote lock on the user interface of the mobile device.

At least one advantage with the above embodiment is that the user interface enables easy and quick overview of the status of the vehicle lock and remote lock as well as simple control of the status of the locks.

According to some embodiments, the user interface is configured to receive input from a user of the mobile device to control the central locking unit to regulate the vehicle lock and the remote lock between the locked and unlocked position.

At least one advantage with the above embodiments is that a user is enabled to easily control locking and unlocking of the vehicle lock and the remote lock by means of e.g. a smart phone. Hence, it can be ensured that all locks connected to the central locking system are locked simultaneously with possibly only one user input. E.g. tapping the display for unlock, or lock respectively.

According to some embodiments, the remote lock is a lock that is configured to lock and unlock the remote unit to the vehicle, is a lock that is configured to lock and unlock an opening of the remote unit or a lock that is configured to lock and unlock a device to the remote unit.

At least one advantage with the above embodiments is that the remote lock is versatile and may have different uses. E.g. it may lock and lock the remote unit to the vehicle, i.e. attach the remote unit to the vehicle; it may lock and unlock the opening of the remote unit, e.g. a door or a lid so access can be made to the inside of the remote unit and hence also possible contents stored therein; it may lock and unlock a device to the remote unit, e.g. a bicycle may be locked to a bicycle holder, a trailer may be locked to a trailer connection on the vehicle etc..

According to a second aspect there is provided a vehicle system comprising a vehicle, one or more remote units detachably connected to the vehicle and the central locking system according to the above.

At least one advantage with the above second aspect is that system is provided for easy management of locking both vehicle locks and remote locks pertaining to remote units attached to the vehicle without having to be in a close vicinity of each lock and with only one locking operation, i.e. by locking the vehicle lock, the remote locks lock as well.

According to a third aspect there is provided a method for controlling a central locking system according to any of the first and/or second aspect, comprising: receiving, in a mobile device, input comprising a desired position of a remote lock of a remote unit from a user, receiving, in a central locking unit, a control instruction comprising instructions to move the remote lock between a locked and unlocked position from the mobile device, receiving, in the remote lock, a regulating signal from the central locking unit to change the position of the remote lock between the locked and unlocked position.

At least one advantage with the above third aspect is that a method is provided for easy management of locking both the vehicle lock and the remote locks pertaining to the remote units attached to the vehicle without having to be in a close vicinity of each lock and with only one locking operation, i.e. by locking the vehicle lock, the remote locks lock as well

According to some embodiments, the method comprises displaying the position of a vehicle lock and the position of the remote lock on a user interface of the mobile device.

At least one advantage with the above embodiments is that a user can easily determine the state of both the vehicle lock and the remote locks, i.e. whether they are locked or unlocked. As well as easily control the status of the locks.

According to some embodiments, the method comprises detecting a first near field communication unit of the remote lock by a second near field communication unit of the central locking unit and connecting the remote lock to the central locking unit.

According to some embodiments, the method comprises detecting a first communication unit of the remote lock by a second communication unit of the central locking unit and connecting the remote lock the central locking unit.

According to some embodiments, the first and second communication unit may utilize a Bluetooth connection.

According to some embodiments, the first and second communication unit may utilize a wi-fi connection.

According to some embodiments, the first and second communication unit may utilize a communication network connection provided by a network operator.

At least one advantage with the above embodiments is that addition of remote locks to the central locking unit is easily enabled through wireless detection.

According to a fourth aspect there is provided a computer program comprising instructions that, when the program is executed by a computer, cause the computer to carry out the method of the third aspect.

In some embodiments, the computer program may be comprised in a computer program product comprising a non-transitory computer readable medium, wherein the non-transitory computer readable medium has stored there on the computer program comprising program instructions. The computer program is configured to be loadable into a data-processing unit, comprising a processor and a memory associated with or integral to the data-processing unit. When loaded into the data-processing unit, the computer program is configured to be stored in the memory, wherein the computer program, when loaded into and run by the processor is configured to cause execution of the method steps according to any of the methods described in conjunction with the third aspect.

Effects and features of the second through fourth aspects are to a large extent analogous to those described above in connection with the first aspect. Embodiments mentioned in relation to the first aspect are largely compatible with the second through fourth aspects.

The present invention and further advantages will become apparent from the detailed description given below. The detailed description and specific examples disclose preferred embodiments of the invention by way of illustration only. Those skilled in the art understand from guidance in the detailed description that changes and modifications may be made within the scope of the invention.

Hence, it is to be understood that the herein disclosed invention is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### BRIEF DESCRIPTION OF DRAWINGS

The disclosure will be described in detail in the following, with reference to the attached drawings, in which
- Fig. 1: shows schematically, a central locking system and vehicle system according to some embodiments of the disclosure,
- Fig. 2a-b: shows schematically, a locking unit according to some embodiments of the disclosure,
- Fig. 2c-d: shows schematically, a remote lock according to some embodiments of the disclosure,
- Fig. 3: shows in a flow chart, a method according to some embodiments of this disclosure,
- Fig. 4: shows schematically, a computer program product according to some embodiments of this disclosure.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

The present invention will now be described with reference to the accompanying drawings, in which preferred example embodiments of the invention are shown. The invention may, however, be embodied in other forms and should not be construed as limited to the herein disclosed embodiments. The disclosed embodiments are provided to fully convey the scope of the invention to the skilled person.

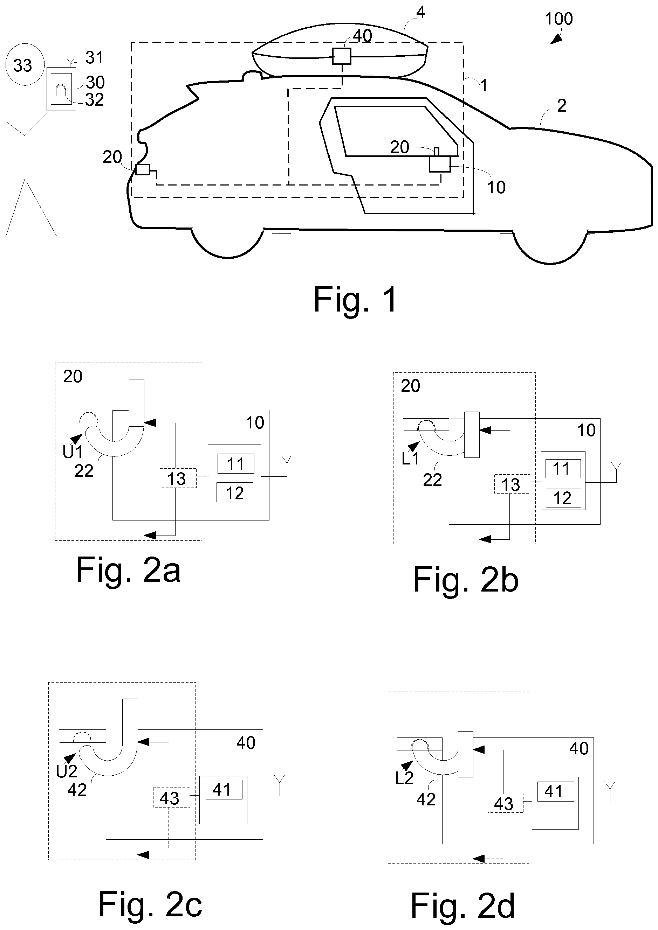

Figure 1 shows a central locking system 1 for locking a vehicle 2. The central locking system 1 comprises a central locking unit 10, at least one vehicle lock 20 of the vehicle 2, wherein the vehicle lock 20 is connected to the central locking unit 10 and arranged to be regulated by the central locking unit 10 between a locked and unlocked position (which positions will be described further in conjunction with Figs. 2a-d). A mobile device 30 is configured to wirelessly connect to the central locking unit 10 and to control the central locking unit 10 to regulate the vehicle lock 20 between the locked and unlocked position. The central locking system 1 comprises at least one remote lock 40 for locking a remote unit 4 configured to be detachably connected to the vehicle 2, wherein the remote lock 40 is configured to be connected to the central locking unit 10 and arranged to be regulated by the central locking unit 10 between a locked and unlocked position (which positions will be described further in conjunction with Figs. 2a-d). The mobile device 30 is configured to control the central locking unit 10 to regulate the remote lock 40 between the locked and unlocked position L2, U2.

Hence fig. 1 illustrates a vehicle system 100 comprising a vehicle 2, one or more remote units 4 detachably connected to the vehicle 2 and the central locking system 1 according to some embodiments.

In fig. 1 the vehicle is illustrated to be a car having a door and a trunk. It should be realized the vehicle may be of any other type such as e.g. a truck, a tractor, a recreational vehicle, a carriage, a boat, a minivan, motor cycle, a moped, a bicycle, a train, an airplane, a helicopter, etc. Furthermore fig. 1 illustrates two vehicle locks 10, one for the door and one for the trunk. It should be noted that fewer or additional vehicle locks are possible, such as e.g. a lock for the glove compartment, a lock for a back door, etc.

The remote unit 4 is in fig. 1 illustrated to be a roof box, but could be of other types, such as a trailer, a bicycle holder, a caravan, a carriage, a ski box etc.

The central locking system 1 in fig. 1 comprise two vehicle locks 20 and one remote lock 40 of the remote unit 4, as indicated by the dashed square. The locks may be connected wirelessly but may also be connected through wire to each other and/or to the central locking system 1. E.g. by being connected to the central locking unit 10. In some embodiments, the vehicle locks 20 may be connected through electrical wires within the vehicle 2, and may have been connected during manufacturing of the vehicle. In some embodiments, the vehicle locks may additionally or alternatively be connected to the central locking system 1 wirelessly. In the same manner, the remote lock of the remote unit may be connected wirelessly or by wire to the central locking system 1. The central locking system 1 may e.g. have inputs for receiving an electrical cable and the remote lock and/or the remote unit may be equipped with a cable for connecting to the outputs of the central locking system 1 in order to connect the remote lock to the central locking system. The inputs may e.g. be arranged in the central locking unit 10, and/or arranged in a circuitry within the vehicle.

A user 33 is seen holding the mobile device 30. The mobile device may e.g. be a smart phone, a tablet, a laptop, a computer or similar (as illustrated in Fig. 1). The mobile device may in some embodiments be a key fob. The key fob may e.g. be associated with the vehicle 2. The key fob may e.g. be configured to control the vehicle lock 20 and the connected remote lock 4 by means of the centralized locking system 1.

The mobile device may comprise a mobile connection unit 31 configured to connect to the central locking system. The mobile device 30 may also comprise an application, wherein the application is configured to control the central locking unit 10 to regulate the vehicle lock 20 and the remote lock 40 between their locked and unlocked position L1,L2;U1,U2.

In some embodiments, the mobile connection unit 31 is e.g. a transceiver circuitry configured to search for and pair against the central locking system 1. Once connected to the central locking system, the mobile connection unit 31 may be configured to receive control input from the user 33 for controlling the vehicle lock and/or the remote lock. In the same manner, once connected to the central locking system, the mobile connection unit 31 may be configured to receive data pertaining to the status of the vehicle lock and/or the remote lock from the central locking system 1. The transceiver circuitry may e.g. comprise an antenna configured to transmit and receive signals. In some embodiments, the transceiver circuitry is a receiver circuitry and a transmitter circuitry separate from each other.

The mobile connection unit 31 may utilize a Bluetooth connection (i.e. a Bluetooth unit) and or a near field communication, NFC connection (i.e. a NFC-unit). In some embodiments, the mobile connection unit may utilize a wireless communication network connection (e.g. LAN, WAN, WLAN, cloud connection, internet connection etc. provided e.g. by a network operator).

In some embodiments, the mobile device 30 may comprise a user interface 32 and the mobile device 30 may be configured to display the status of the vehicle lock 20 and the remote lock 40 on the user interface 32 of the mobile device 30. In some embodiments, the user interface 32 may be provided by the application. The application may in some embodiments be downloaded and installed on the mobile device.

In some embodiments, the application may be configured to be controlled by the user through the interface 32. The interface 32 may e.g. illustrate the status of the vehicle lock 20 and the remote lock 4 by means of an image of an opened or closed padlock (or other type of lock). The interface 32 may further be configured to display various control options such as "lock/unlock"; "lock/unlock a specific lock connected to the central locking system (such as only the vehicle lock attached to the vehicle door, or only the remote lock etc.)"; "lock/unlock all locks connected to the central locking system". The interface 32 may receive input from the user 33, which is transferred to the mobile connection unit 31 for transmission to the central locking system 1.

In some embodiments, the user interface 31 is configured to receive input from a user 33 of the mobile device 30 to control the central locking unit 10 to regulate the vehicle lock 20 and the remote lock 40 between the locked and unlocked position L1,L2;U1,U2.

Hence, the user is enabled to control all locks connected to the central locking system 1 and/or controlled by the central locking unit 10. The user may e.g. chose to lock or unlock one or more locks regardless of the status of the other locks. Thus, the user is enabled to lock/unlock e.g. only the remote lock, or only one or more of the vehicle lock 20 (e.g. only the lock attached to the trunk, or only the lock attached to the door). The user may also be enabled to lock/unlock all locks connected to the central locking system 1 simultaneously.

By means of the interface, the user is enabled to quickly determine which locks are locked/unlocked as well as quickly lock/unlock the locks connected to the central locking system. In some embodiments, the application may be configured such that when the user locks/unlocks the vehicle lock, the remote locks are automatically locked/unlocked as well. Hence, the central locking system integrates any remote lock into the central locking system of the vehicle, ridding the need for several different keys to each lock. The central locking system according to the embodiments herein further enhances a sense of security for the user, since the user will know that if the vehicle lock 20 is locked, then also the remote lock 4 is locked. Hence, the user will not have to worry about forgetting locking the remote unit.

Furthermore, by means of the interface, the user is enabled to check the status of the vehicle lock and remote lock during transit of the vehicle. The user may e.g. operate a vehicle which is not easily parked (such as e.g. an airplane or other flying vehicle etc.), or the user is not enabled to exit the vehicle (the user may e.g. be in a road tunnel or there is excessive rain pouring down etc.) but would still like to check the status of the locks. Then, by using the mobile device the user is enabled to easily determine and control the status of the vehicle lock and remote lock without having to stop/park or even leave the interior of the vehicle.

In some embodiments, the remote lock will always follow the status of the vehicle lock. Hence in an application where the vehicle is configured to lock itself e.g. if has been unlocked for a predetermined amount of time (possibly based on some logic, e.g. no door has been opened), the remote lock will automatically lock when the vehicle lock is automatically locked. This may also apply to the remote lock if the vehicle lock is configured to lock automatically when the vehicle is in transit.

The above embodiment may be a setting, which the user can apply through the mobile device. Hence, a user may choose to have individual control over every respective lock connected to the central locking system while still allowing automatic locking of the remote locks if the vehicle lock(s) is automatically locked.

Figs. 2a-d illustrates the locking unit 10 and the remote locking unit 40 in more detail according to some embodiments. The locking unit 10 and locking unit 40 of Figs. 2a-2d may e.g. be the locking unit 10 and locking unit 40 as described in conjunction with fig. 1.

Fig. 2a schematically illustrates the central locking unit 10 in an unlocked U1 state. The central locking unit 10 comprises a mobile connection unit 12 configured to connect to a mobile connection unit of a mobile device (e.g. the mobile device 30 and mobile connection unit 31 described in conjunction with fig. 1).

In some embodiments, the central locking unit may comprise a vehicle lock 20 (e.g., the vehicle lock as described in conjunction with fig.1). The vehicle lock 20 may in some embodiments comprise an electrically operable locking hatch 22. The vehicle lock 20 may in some embodiments comprise a controlling circuitry 13 (e.g. a controller). The controlling circuitry may e.g. be controlled by the central locking unit 10, based on received inputs from e.g. the mobile connection unit 12, to cause movement of the locking hatch 22 between an unlocked state UL1 and a locked state L1. Hence, the mobile connection unit 12 may in some embodiments relay user inputs for locking/unlocking the vehicle lock 20 and/or a remote lock.

Fig. 2a illustrates the central locking unit 10 where the locking hatch 22 is in the unlocked state U1, whereas Fig. 2b illustrates the central locking unit 10 where the locking hatch 22 is in the locked state L1.

The controlling circuitry 13 may be configured to control all vehicle locks. The controlling circuitry 13 may e.g. be configured to control door locks, trunk locks, glove compartment locks etc. In some embodiments, the controlling circuitry 13 is integrated with and comprised by the mobile connection unit 12.

The mobile connection unit 12 may e.g. be a transceiver circuitry configured to search for and pair against the mobile connection unit 31 of the mobile device (compare with fig. 1). Once connected to the mobile device, the mobile connection unit 12 may be configured to receive control input from the mobile device for controlling the vehicle lock and/or the remote lock. In the same manner, once connected to the mobile device, the mobile connection unit 12 may be configured to transmit data pertaining to the status of the vehicle lock and/or the remote lock to the mobile device. The transceiver circuitry may e.g. comprise an antenna configured to transmit and receive signals. In some embodiments, the transceiver circuitry is a receiver circuitry and a transmitter circuitry separate from each other.

The mobile connection unit 12 may utilize a Bluetooth connection (i.e. be a Bluetooth unit e.g. a Bluetooth transceiver circuitry) and or a near field communication, NFC connection (i.e. be a NFC-unit e.g. a NFC-transceiver circuitry). In some embodiments, the mobile connection unit may utilize a wireless communication network connection. Hence the mobile device may control the central locking system (e.g. by receiving inputs from and transmitting control signaling to the mobile connection unit 12 of the central locking system) even if the user is far away from the vehicle. In some embodiments, as long as the mobile device and the central locking system has access to a communication network (e.g. the internet) the user is enabled to control the locks. Hence, in some embodiments the user may park the vehicle in a parking spot and then leave the vehicle. The user may e.g. enter a work building or go on a hike, or travel on vacation etc., while still being able to survey the status of the central locking system as well as control the central locking system.

The central locking system 1 may further comprise a wireless communication unit 11. The wireless communication unit 11 may be configured for connecting the central locking unit 10 to the remote lock (and thereby connect it to the central locking system 1). The wireless communication unit 11 may in some embodiments comprise a
transmitter/receiver/transceiver/antenna circuitry for wirelessly detecting and connecting to the remote lock. In some embodiments, the wireless communication unit 11 is a blue tooth unit. In some embodiments the wireless communication unit 11 is a NFC unit, or an RFID-unit.

In some embodiments, the wireless communication unit 11 may be integrated with, or be the mobile communication unit 12.

In some embodiments the wireless communication unit 11 and/or the mobile communication unit 12 may comprise or be integrated with the controlling circuitry 13.

Figs. 2c-d illustrate the remote lock 40 according to some embodiments. The remote lock 40 may e.g. be the remote lock as described in conjunction with any of the previous figures 1-2a-b.

The remote lock comprises a first wireless communication unit 41 configured to connect the remote lock 40 to the central locking unit 10 via a second wireless communication unit 11 of the central locking unit 10 (e.g. the wireless communication unit 11 described in conjunction with figs. 2a-b). The wireless communication unit 41 may in some embodiments comprise transmitter/receiver/transceiver/antenna circuitry for wirelessly detecting and connecting to the central locking unit 10.

In some embodiments, the first and second wireless communication units 41, 11 are a near field communications (NFC) or Bluetooth unit 41, 11.

Hence, the wireless communication unit 41 may be configured to automatically and continuously search for and pair against the wireless communication unit 11 of the central locking unit 10. Once connected, the remote lock is a part of the central locking system 1 and is controlled by the central locking unit 10.

Thus, when a remote lock is in a connection range of the central locking system it may automatically be detected and connected to the central locking system. In the same manner, if the remote lock is removed from the connection range of the central locking system it may be removed from the central locking system. Hence, if e.g. the roof box is removed from the vehicle and e.g. put in storage (such as a garage), the central locking system and central locking unit will no longer control the operation of the remote lock.

In some embodiments, the wireless communication unit 41 may be configured to utilize a wireless communication network connection (e.g. the internet) for connecting the remote lock to the central locking system through the central locking unit. In such case the remote lock may always form a part of the central locking system once connected (and not removed by the user through the mobile device), even if the remote unit is removed from the vehicle.

In some embodiment, the wireless communication unit 41 is configured to receive controlling signals (control input) from the central locking unit for controlling the status of the remote lock. E.g., the wireless communication unit 41 may receive instructions indicating that the remote lock 40 should move to a locked/unlocked position.

In some embodiments, the remote lock 40 comprises an electrically operable locking latch 42 configured to be moved to position the remote lock 40 in the locked and unlocked position L2, U2. Fig. 2c illustrates the locking latch 42 in the unlocked state U2. Fig.2d illustrates the locking latch 42 in the locked state L2.

The remote lock 40 is configured to lock and unlock any of a trailer, cargos, a roof box, a cycle carrier, a padlock, a bike lock and a caravan. As mentioned previously, other items than can be attached to a vehicle are eligible to be locked and unlocked by the remote lock, such as e.g. boat motors, spare tire boxes etc.

In some embodiments, the remote lock 40 may comprise a controlling circuitry 43 (e.g. a controller). The controlling circuitry may e.g. be controlled by the remote lock 40, based on received inputs from e.g. the wireless communication unit 41 communicating with the central locking unit 10, to cause movement of the locking hatch 42 to move between an unlocked state U1 and a locked state L1.

In some embodiments, the controlling circuitry 43 may additionally, or alternatively, be directly controlled by the central locking unit 10, based on received inputs from e.g. the mobile connection unit 12, to cause movement of the locking hatch 42 between an unlocked state U1 and a locked state L1. The controlling circuitry 43 may hence be controlled by the controlling circuitry 13 and/or the mobile connection unit 12 of the central locking system.

In some embodiments, the controlling circuitry 43 may communicate with the central locking unit e.g. through the wireless connection devices 41, 11 for receiving inputs for controlling the electrically operable locking hatch 42 to move between the locked state L2 and the unlocked state U2 (i.e. position the locking hatch in locked position and/or an unlocked position).

In some embodiments, the remote lock 40 is at least one of a lock that is configured to lock and unlock the remote unit 4 to the vehicle 2, a lock that is configured to lock and unlock an opening of the remote unit 4 or a lock that is configured to lock and unlock a device to the remote unit 4. Hence, the remote lock may be for attaching/detaching the remote device to the vehicle, such as e.g. an electronic padlock holding a cargo or roof box in place. Alternatively or additionally the remote lock may be fore locking/unlocking the door or lid of the remote unit, e.g. the doors on a trailer or the lid of a roof box etc. Alternatively or additionally, the remote lock may be for attaching/detaching a device to the remote unit, such as e.g. a bike to a bike holder, a spare tire to a spare tire holder etc.

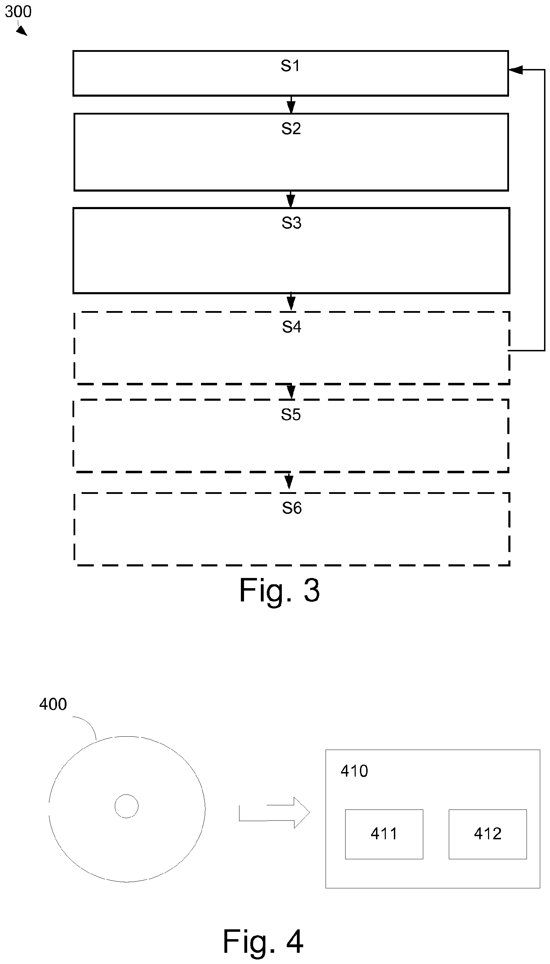

Fig. 3 illustrates an example method 300 according to some embodiments.

The method 300 may e.g. be carried out by the central locking system in cooperation with a mobile device, a remote lock of a remote unit, a user, a vehicle lock and an interface as described in conjunction with any of the previous Figs. 1-2a.d.

The method 300 comprises receiving S1, in a mobile device, input comprising a desired position of a remote lock 40 of a remote unit 4 from a user 33, receiving S2, in a central locking unit 10, a control instruction comprising instructions to move the remote lock 40 between a locked and unlocked position L2,U2 from the mobile device 30, receiving S3, in the remote lock 40, a regulating signal from the central locking unit 10 to change the position of the remote lock 40 between the locked and unlocked position L2,U2.

Hence, according to some embodiments, in step S1 of the method 300 the mobile device receives an input (i.e. control instruction) from the user. In step S2 the central locking unit of the central locking system receives the input from the user via the mobile device. The input may be a control input instructing the central locking unit that the remote lock is to be put in a locked position or an unlocked position. The central locking unit may receive the input through a mobile connection unit (compare with Fig. 2a-d). In step S3 the remote lock receives a regulating signal from the central locking unit instructing the remote lock to change the position between the locked and the unlocked position based on the content of the regulating signal. The remote lock may e.g. control a locking hatch (compare with Figs. 2a-d) for unlocking/locking the remote lock.

In some embodiments, the step S3 may also comprise the step of the central locking unit transmitting the received input from the mobile device to the remote lock.

In some embodiments, the method 300 may additionally, or alternatively, comprises controlling a vehicle lock (e.g. the vehicle lock as described in conjunction with any of the Figs. 1-2a.d). Hence in step S1 the mobile device may receive control instructions (or control input, the terms may be used interchangeably) from the user relating to a desired position of the vehicle lock (i.e. whether the user wished to lock/unlock the vehicle lock). In step S2, the central locking unit receives the control input from the mobile device. In step S3 the mobile connection unit of the central locking unit receives the control input for controlling the vehicle lock and moves e.g. the locking hatch of the vehicle lock between a locked and an unlocked position based on the content of the control input.

In some embodiments, the step S3 may also comprise the step of the central locking unit transmitting the received input from the mobile device to the vehicle lock.

Hence the method 300 may in some embodiments be applied to control either or both of the (at least one) remote lock and the (at least one) vehicle lock.

In some embodiments, the method 300 may optionally comprise displaying S4 the position of a vehicle lock 20 and the position of the remote lock 40 on a user interface 32 of the mobile device 30.

In some embodiments, the method 300 may optionally comprise detecting S5 a first near field communication unit 41 of the remote lock 40 by a second near field communication unit 11 of the central locking unit 10 and connecting S6 the remote lock 40 to the central locking unit 10.

The near field communication unit 41 and 11 may be a wireless communication unit (compare e.g. with Figs. 2a-d).

It should be noted that all though fig. 3 illustrates optional steps S4, S5 and S6 as following steps S1-S3, this order of the steps is just an example. For instance, in some embodiments, the steps S5-S6 may be carried out prior to the step S1. The step S4 may be carried out following the steps S5-S6. The steps S4 -S6 may, in some embodiments, be carried out simultaneously as the steps S1-S3.

For example, the method may comprise that the mobile device should display the status of the central locking system whenever the user requests it. In the same manner, the method may comprise detecting and connecting a remote lock to the central locking system whenever a remote lock is within connection range of the central locking system.

Fig. 4 illustrates a computer program product 400 comprising a non-transitory computer readable medium, wherein the non-transitory computer readable medium has stored there on the computer program comprising program instructions. The computer program is configured to be loadable into a data-processing unit 410, comprising a processor 411 and a memory 412 associated with or integral to the data-processing unit 410. When loaded into the data-processing unit 410, the computer program is configured to be stored in the memory 412, wherein the computer program, when loaded into and run by the processor 411 is configured to cause the execution of e.g. any of the method steps according to the method 300 described in conjunction with the fig. 3.

The processor 411 may be or include any number of hardware components for conducting data or signal processing or for executing computer code stored in memory. The memory 412 may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to an exemplary embodiment, any distributed or local memory device may be utilized with the systems and methods of this description. According to an exemplary embodiment the memory is communicably connected to the processor (e.g., via a circuit or any other wired, wireless, or network connection) and includes computer code for executing one or more processes described herein.

Hence disclosed herein is a system for enabling easy and centralised operation of one or more vehicle locks and one or more remote locks. Wherein the remote locks are associated with one or more remote unit connectable to the vehicle.

The embodiments disclosed herein enables a user to centrally control all locks connected to the central locking system. Hence, the remote locks associated with the remote units may be connected to the central locking system and be controlled as if they were an integrated part of the vehicle's own central locking system. Furthermore, a user will be provided with real-time data pertaining to the status of the locks connected to the central locking system. Thus, a user is enabled to easily, and quickly, acquire an overview of whether the lock(s) pertaining to both the vehicle and the remote unit(s) are locked/unlocked. In the same manner, the user is enabled to easily and quickly lock/unlock all, or a respective, of the locks connected to the central locking system.

The person skilled in the art realizes that the present invention is not limited to the preferred embodiments described above. The person skilled in the art further realizes that modifications and variations are possible within the scope of the appended claims. For example, various types of locks may be used for the remote lock such as pad locks, code locks, combinatory locks etc. Various types of vehicles are possible, various types of remote units and various types of mobile devices, as well as various types of connection steps/methods for connecting the remote locks to the central locking system.

Additionally, variations to the disclosed embodiments can be understood and effected by the skilled person in practicing the claimed invention, from a study of the drawings, the disclosure, and the appended claims.

The present disclosure has been presented above with reference to specific embodiments. However, other embodiments than the above described are possible and within the scope of the disclosure. Different method steps than those described above, performing the method by hardware or software, may be provided within the scope of the disclosure. Thus, according to an exemplary embodiment, there is provided a non-transitory computer-readable storage medium storing one or more programs configured to be executed by one or more processors, as described in conjunction with fig. 3, the one or more programs comprising instructions for performing the method according to any one of the above-discussed embodiments. Alternatively, according to another exemplary embodiment a cloud computing system can be configured to perform any of the method aspects presented herein. The cloud computing system may comprise distributed cloud computing resources that jointly perform the method aspects presented herein under control of one or more computer program products. Moreover, the processor may be connected to one or more communication interfaces and/or sensor interfaces for receiving and/transmitting data with external entities such as e.g. sensors arranged on the vehicle surface, an off-site server, or a cloud-based server.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made and equivalents may be substituted for elements thereof without departing from the scope of the present disclosure as defined in the claims. Furthermore, modifications may be made to adapt a particular situation or material to the teachings of the present disclosure without departing from the essential scope thereof. Therefore, it is intended that the present disclosure not be limited to the particular examples illustrated by the drawings and described in the specification as the best mode presently contemplated for carrying out the teachings of the present disclosure, but that the scope of the present disclosure will include any embodiments falling within the foregoing description and the appended claims. Reference signs mentioned in the claims should not be seen as limiting the extent of the matter protected by the claims, and their sole function is to make claims easier to understand.

### REFERENCE SIGNS

- 1:: Central locking system
- 2:: Vehicle
- 4:: Remote unit
- 10:: Central locking unit
- 11, 41:: Wireless communication unit
- 12, 31:: Mobile connection unit
- 13:: Controlling circuitry
- 20:: Vehicle lock
- 22, 42:: electrically operable locking hatch
- 30:: Mobile device
- 32:: User interface
- 33:: User
- 40;: Remote lock
- 100;: Vehicle System
- L1, L2:: Locked position
- U1;U2;: Unlocked position
- 400;: Computer program product
- 410;: Data processing unit
- 411;: Processor
- 412;: Memory
- 300;: Method

## Claims

1. A central locking system (1) for locking a vehicle (2), comprising
• a central locking unit (10),
• at least one vehicle lock (20) of the vehicle (2), wherein the vehicle lock (20) is connected to the central locking unit (10) and arranged to be regulated by the central locking unit (10) between a locked and unlocked position (L1, U1),
• a mobile device (30) configured to wirelessly connect to the central locking unit (10) and to control the central locking unit (10) to regulate the vehicle lock (20) between the locked and unlocked position (L1, U1),
wherein the central locking system (1) comprises at least one remote lock (40) for locking a remote unit (4) configured to be detachably connected to the vehicle (2), wherein the remote lock (40) is configured to be connected to the central locking unit (10) and arranged to be regulated by the central locking unit (10) between a locked and unlocked position (L2, U2), and the mobile device (30) is configured to control the central locking unit (10) to regulate the remote lock (40) between the locked and unlocked position (L,2 U2),
**characterized in that** the remote lock (40) is configured to lock and unlock any of a trailer, cargos, a roof box, a cycle carrier, a padlock, a bike lock and a caravan.

2. The central locking system (1) according to claim 1, wherein the remote lock (40) comprises a first wireless communication unit (41) configured to connect the remote lock (40) to the central locking unit (10) via a second wireless communication unit (11) of the central locking unit (10).

3. The central locking system (1) according to claim 2, wherein the first and second wireless communication units (41, 11) are a near field communications (NFC) or Bluetooth units (41, 11).

4. The central locking system (1) according to any of the preceding claims, wherein the central locking unit (10) comprises a mobile connection unit (12) configured to connect to a mobile connection unit (31) of the mobile device (30).

5. The central locking system (1) according to any of the preceding claims, wherein the remote lock (40) comprises an electrically operable locking latch (22, 42) configured to be moved to position the remote lock (40) in the locked and unlocked position (L2, U2).

6. The central locking system (1) according to any of the preceding claims, wherein the mobile device (30) comprises an application, wherein the application is configured to control the central locking unit (10) to regulate the vehicle lock (20) and the remote lock (40) between their locked and unlocked position (L1, L2;U1, U2).

7. The central locking system (1) according to any of the preceding claims, wherein the mobile device (30) comprises a user interface (32) and wherein the mobile device (30) is configured to display the status of the vehicle lock (20) and the remote lock (40) on the user interface (32) of the mobile device (30).

8. The central locking system (1) according to claim 7, wherein the user interface (32) is configured to receive input from a user (33) of the mobile device (30) to control the central locking unit (10) to regulate the vehicle lock (20) and the remote lock (40) between the locked and unlocked position (L1,L2; U1, U2).

9. The central locking system (1) according to any of the preceding claims, wherein the remote lock (40) is a lock that is configured to lock and unlock the remote unit (4) to the vehicle (2), is a lock that is configured to lock and unlock an opening of the remote unit (4) or a lock that is configured to lock and unlock a device to the remote unit (4).

10. A vehicle system (100) comprising a vehicle (2), one or more remote units (4) detachably connected to the vehicle (2) and the central locking system (1) according to any of the preceding claims.

11. A method for controlling a central locking system (1) according to any of claims 1-9, comprising:
receiving (S1), in a mobile device (30), input comprising a desired position of a remote lock (40) of a remote unit (4) from a user (33),
receiving (S2), in a central locking unit (10), a control instruction comprising instructions to move the remote lock (40) between a locked and unlocked position (L2, U2) from the mobile device (30),
receiving (S3), in the remote lock (40), a regulating signal from the central locking unit (10) to change the position of the remote lock (40) between the locked and unlocked position (L2, U2).

12. The method according to claim 11, comprising displaying (S4) the position of a vehicle lock (20) and the position of the remote lock (40) on a user interface (32) of the mobile device (30).

13. The method according to any of claims 11-12, comprising detecting (S5) a first near field communication unit (41) of the remote lock (40) by a second near field communication unit (11) of the central locking unit (10) and connecting (S6) the remote lock (40) to the central locking unit (10).

14. A computer program comprising instructions that, when the program is executed by a computer, cause the computer to carry out the method of claim 11-13.

## Patentansprüche

1. Zentralverriegelungssystem (1) zum Verriegeln eines Fahrzeugs (2), umfassend:
∘ eine Zentralverriegelungseinheit (10),
∘ mindestens eine Fahrzeugverriegelung (20) des Fahrzeugs (2), wobei die Fahrzeugverriegelung (20) mit der Zentralverriegelungseinheit (10) verbunden und angeordnet ist, um von der Zentralverriegelungseinheit (10) zwischen einer verriegelten und einer entriegelten Position (L1, U1) geregelt zu werden,
∘ eine mobile Vorrichtung (30), die dazu konfiguriert ist, sich drahtlos mit der Zentralverriegelungseinheit (10) zu verbinden und die Zentralverriegelungseinheit (10) zu steuern, um die Fahrzeugverriegelung (20) zwischen der verriegelten und der entriegelten Position (L1, U1) zu regeln,
wobei das Zentralverriegelungssystem (1) mindestens eine Fernverriegelung (40) zum Verriegeln einer Ferneinheit (4) umfasst, die dazu konfiguriert ist, abnehmbar mit dem Fahrzeug (2) verbunden zu werden, wobei die Fernverriegelung (40) dazu konfiguriert ist, mit der Zentralverriegelungseinheit (10) verbunden zu werden, und angeordnet ist, um durch die Zentralverriegelungseinheit (10) zwischen einer verriegelten und einer entriegelten Position (L2, U2) geregelt zu werden, und
die mobile Vorrichtung (30) dazu konfiguriert ist, die Zentralverriegelungseinheit (10) zu steuern, um die Fernverriegelung (40) zwischen der verriegelten und der entriegelten Position (L2, U2) zu regeln,
**dadurch gekennzeichnet, dass** die Fernverriegelung (40) zum Ver- und Entriegeln eines beliebigen von einem Anhänger, einer Ladung, einer Dachbox, einem Fahrradträger, einem Vorhängeschloss, einem Fahrradschloss und einem Wohnwagen konfiguriert ist.

2. Zentralverriegelungssystem (1) nach Anspruch 1, wobei die Fernverriegelung (40) eine erste drahtlose Kommunikationseinheit (41) umfasst, die dazu konfiguriert ist, die Fernverriegelung (40) über eine zweite drahtlose Kommunikationseinheit (11) der Zentralverriegelungseinheit (10) mit der Zentralverriegelungseinheit (10) zu verbinden.

3. Zentralverriegelungssystem (1) nach Anspruch 2, wobei die erste und zweite drahtlose Kommunikationseinheit (41, 11) eine Nahfeldkommunikationseinheit (NFC-Einheit) oder eine Bluetooth-Einheit (41, 11) sind.

4. Zentralverriegelungssystem (1) nach einem der vorstehenden Ansprüche, wobei die Zentralverriegelungseinheit (10) eine mobile Verbindungseinheit (12) umfasst, die dazu konfiguriert ist, sich mit einer mobilen Verbindungseinheit (31) der mobilen Vorrichtung (30) zu verbinden.

5. Zentralverriegelungssystem (1) nach einem der vorstehenden Ansprüche, wobei die Fernverriegelung (40) einen elektrisch betreibbaren Sperrriegel (22, 42) umfasst, der zum Bewegen konfiguriert ist, um die Fernverriegelung (40) in die verriegelte und entriegelte Position (L2, U2) zu bringen.

6. Zentralverriegelungssystem (1) nach einem der vorstehenden Ansprüche, wobei die mobile Vorrichtung (30) eine Anwendung umfasst, wobei die Anwendung dazu konfiguriert ist, die Zentralverriegelungseinheit (10) zu steuern, um die Fahrzeugverriegelung (20) und die Fernverriegelung (40) zwischen ihrer verriegelten und entriegelten Position (L1, L2; U1, U2) zu regeln.

7. Zentralverriegelungssystem (1) nach einem der vorstehenden Ansprüche, wobei die mobile Vorrichtung (30) eine Benutzerschnittstelle (32) umfasst und wobei die mobile Vorrichtung (30) dazu konfiguriert ist, den Status der Fahrzeugverriegelung (20) und der Fernverriegelung (40) auf der Benutzerschnittstelle (32) der mobilen Vorrichtung (30) anzuzeigen.

8. Zentralverriegelungssystem (1) nach Anspruch 7, wobei die Benutzerschnittstelle (32) dazu konfiguriert ist, Eingaben von einem Benutzer (33) der mobilen Vorrichtung (30) zu empfangen, um die Zentralverriegelungseinheit (10) zu steuern, um die Fahrzeugverriegelung (20) und die Fernverriegelung (40) zwischen der verriegelten und entriegelten Position (L1, L2; U1, U2) zu regeln.

9. Zentralverriegelungssystem (1) nach einem der vorstehenden Ansprüche, wobei die Fernverriegelung (40) eine Verriegelung ist, die dazu konfiguriert ist, die Ferneinheit (4) mit dem Fahrzeug (2) zu verriegeln und zu entriegeln, eine Verriegelung ist, die dazu konfiguriert ist, eine Öffnung der Ferneinheit (4) zu verriegeln und zu entriegeln, oder eine Verriegelung ist, die dazu konfiguriert ist, eine Vorrichtung mit der Ferneinheit (4) zu verriegeln und zu entriegeln.

10. Fahrzeugsystem (100), umfassend ein Fahrzeug (2), eine oder mehrere mit dem Fahrzeug (2) abnehmbar verbundene Ferneinheiten (4) und das Zentralverriegelungssystem (1) nach einem der vorstehenden Ansprüche.

11. Verfahren zum Steuern eines Zentralverriegelungssystems (1) nach einem der Ansprüche 1 bis 9, umfassend:
Empfangen (S1), in einer mobilen Vorrichtung (30), einer Eingabe, die eine gewünschte Position einer Fernverriegelung (40) einer Ferneinheit (4) von einem Benutzer (33) umfasst, Empfangen (S2), in einer Zentralverriegelungseinheit (10), eines Steuerbefehls, der Anweisungen zum Bewegen der Fernverriegelung (40) zwischen einer verriegelten und entriegelten Position (L2, U2) von der mobilen Vorrichtung (30) umfasst,
Empfangen (S3), in der Fernverriegelung (40), eines Regelsignals von der Zentralverriegelungseinheit (10), um die Position der Fernverriegelung (40) zwischen der verriegelten und der entriegelten Position (L2, U2) zu ändern.

12. Verfahren nach Anspruch 11, umfassend Anzeigen (S4) der Position einer Fahrzeugverriegelung (20) und der Position der Fernverriegelung (40) auf einer Benutzerschnittstelle (32) der mobilen Vorrichtung (30).

13. Verfahren nach einem der Ansprüche 11 bis 12, umfassend Erfassen (S5) einer ersten Nahfeldkommunikationseinheit (41) der Fernverriegelung (40) durch eine zweite Nahfeldkommunikationseinheit (11) der Zentralverriegelungseinheit (10) und Verbinden (S6) der Fernverriegelung (40) mit der Zentralverriegelungseinheit (10) .

14. Computerprogramm, umfassend Anweisungen, die, wenn das Programm von einem Computer ausgeführt wird, den Computer dazu veranlassen, das Verfahren nach Anspruch 11 bis 13 durchzuführen.

## Revendications

1. Système de verrouillage central (1) pour verrouiller un véhicule (2), comprenant
∘ une unité de verrouillage central (10),
∘ au moins un verrou de véhicule (20) du véhicule (2), dans lequel le verrou de véhicule (20) est relié à l'unité de verrouillage central (10) et agencé pour être régulé par l'unité de verrouillage central (10) entre une position verrouillée et déverrouillée (L1, U1),
∘ un dispositif mobile (30) configuré pour se connecter sans fil à l'unité de verrouillage central (10) et pour commander l'unité de verrouillage central (10) afin de réguler le verrou du véhicule (20) entre la position verrouillée et déverrouillée (L1, U1),
dans lequel le système de verrouillage central (1) comprend au moins un verrou à distance (40) pour verrouiller une unité distante (4) configurée pour être connectée de manière amovible au véhicule (2), dans lequel le verrou à distance (40) est configuré pour être connecté à l'unité de verrouillage central (10) et agencé pour être régulé par l'unité de verrouillage central (10) entre une position verrouillée et déverrouillée (L2, U2), et le dispositif mobile (30) est configuré pour commander l'unité de verrouillage central (10) pour réguler le verrou à distance (40) entre la position verrouillée et déverrouillée (L2, U2),
**caractérisé en ce que** le verrou à distance (40) est configuré pour verrouiller et déverrouiller une remorque, une cargaison, un coffre de toit, un porte-vélos, un cadenas, un antivol pour vélo et une caravane.

2. Système de verrouillage central (1) selon la revendication 1, dans lequel le verrou à distance (40) comprend une première unité de communication sans fil (41) configurée pour connecter le verrou à distance (40) à l'unité de verrouillage central (10) via une seconde unité de communication sans fil (11) de l'unité de verrouillage central (10).

3. Système de verrouillage central (1) selon la revendication 2, dans lequel les première et seconde unités de communication sans fil (41, 11) sont des unités de communication en champ proche (NFC) ou des unités Bluetooth (41, 11).

4. Système de verrouillage central (1) selon l'une quelconque des revendications précédentes, dans lequel l'unité de verrouillage central (10) comprend une unité de connexion mobile (12) configurée pour se connecter à une unité de connexion mobile (31) du dispositif mobile (30).

5. Système de verrouillage central (1) selon l'une quelconque des revendications précédentes, dans lequel le verrou à distance (40) comprend un loquet de verrouillage à commande électrique (22, 42) configuré pour être déplacé pour positionner le verrou à distance (40) dans les positions verrouillée et déverrouillée (L2, U2).

6. Système de verrouillage central (1) selon l'une quelconque des revendications précédentes, dans lequel le dispositif mobile (30) comprend une application, dans lequel l'application est configurée pour commander l'unité de verrouillage central (10) pour réguler le verrou du véhicule (20) et le verrou à distance (40) entre leur position verrouillée et déverrouillée (L1, L2 ; U1, U2).

7. Système de verrouillage central (1) selon l'une quelconque des revendications précédentes, dans lequel le dispositif mobile (30) comprend une interface utilisateur (32) et dans lequel le dispositif mobile (30) est configuré pour afficher l'état du verrou du véhicule (20) et du verrou à distance (40) sur l'interface utilisateur (32) du dispositif mobile (30).

8. Système de verrouillage central (1) selon la revendication 7, dans lequel l'interface utilisateur (32) est configurée pour recevoir une entrée d'un utilisateur (33) du dispositif mobile (30) pour commander l'unité de verrouillage central (10) pour réguler le verrou du véhicule (20) et le verrou à distance (40) entre la position verrouillée et déverrouillée (L1, L2 ; U1, U2).

9. Système de verrouillage central (1) selon l'une quelconque des revendications précédentes, dans lequel le verrou à distance (40) est un verrou qui est configuré pour verrouiller et déverrouiller l'unité distante (4) sur le véhicule (2), est un verrou qui est configuré pour verrouiller et déverrouiller une ouverture de l'unité distante (4) ou un verrou qui est configuré pour verrouiller et déverrouiller un dispositif sur l'unité distante (4).

10. Système de véhicule (100) comprenant un véhicule (2), une ou plusieurs unités distantes (4) connectées de manière amovible au véhicule (2) et le système de verrouillage central (1) selon l'une quelconque des revendications précédentes.

11. Procédé de commande d'un système de verrouillage central (1) selon l'une quelconque des revendications 1 à 9, comprenant :
la réception (S1), dans un dispositif mobile (30), d'une entrée comprenant une position souhaitée d'un verrou à distance (40) d'une unité distante (4) provenant d'un utilisateur (33), la réception (S2), dans une unité de verrouillage central (10), d'une instruction de commande comprenant des instructions pour déplacer le verrou à distance (40) entre une position verrouillée et déverrouillée (L2, U2) depuis le dispositif mobile (30),
la réception (S3), dans le verrou à distance (40), d'un signal de régulation depuis l'unité de verrouillage central (10) pour changer la position du verrou à distance (40) entre la position verrouillée et déverrouillée (L2, U2).

12. Procédé selon la revendication 11, comprenant l'affichage (S4) de la position d'un verrou du véhicule (20) et de la position du verrou à distance (40) sur une interface utilisateur (32) du dispositif mobile (30).

13. Procédé selon l'une quelconque des revendications 11 et 12, comprenant la détection (S5) d'une première unité de communication en champ proche (41) du verrou à distance (40) par une seconde unité de communication en champ proche (11) de l'unité de verrouillage central (10) et la connexion (S6) du verrou à distance (40) à l'unité de verrouillage central (10).

14. Programme informatique comprenant des instructions qui, lorsque le programme est exécuté par un ordinateur, amènent l'ordinateur à exécuter le procédé selon les revendications 11 à 13.
